# EUROPÄISCHE PATENTANMELDUNG

(11) **EP 0 635 328 A1**
(43) Veröffentlichungstag der Anmeldung: **25.01.1995**
(21) Anmeldenummer: 94105750.7
(22) Anmeldetag: 14.04.1994
(51) Int. Cl.: B23D 31/00, F16C 9/04

(54) **Verfahren und Vorrichtung zum Bruchtrennen von Pleueln**

(30) Priorität: 15.05.1993 DE 4316354
(71) Anmelder: Grob-Werke GmbH & Co. KG, D-87719 Mindelheim (DE)
(72) Erfinder: Högl, Josef, D-87719 Mindelheim (DE)
(74) Vertreter: Pfister, Helmut, Dipl.-Ing.

(57) **Zusammenfassung**

Beim Trennvorgang ist die Kappe (31) mittels der Verbindungsschrauben (28) mit dem anderen Teil (32) des großen Auges verbunden. Dabei sind die Verbindungsschrauben (28) nur teilweise eingeschraubt, so daß der Trennvorgang möglich ist. Die Widerlager (25) stützen die Köpfe (29) der Verbindungsschrauben (28) ab.

## Beschreibung

Die Erfindung betrifft ein Verfahren zum Bruchtrennen von Pleueln, wobei die Kappe des großen Auges des Pleuels durch eine in der Pleuelebene wirkende Trennkraft von der Stange abgetrennt wird, die Trennkraft spreizend im Pleuelauge wirksam ist, die Stange mit den nicht abzutrennenden Teilen des Pleuels auf einer ersten Halterung festgespannt wird und an der Kappe eine zweite Halterung anliegt, wobei die beiden Halterungen in Richtung der Trennkraft relativ zueinander bewegt werden.

Die Erfindung betrifft weiter eine Vorrichtung zur Durchführung des Verfahrens.

Das Bruchtrennen von Pleueln, die pulvermetallurgisch hergestellt sind, ist bekannt. Die Kappe des großen Auges wird von den übrigen Teilen des Pleuels abgetrennt, wobei die Trennkraft in der Pleuelebene spreizend im Pleuelauge wirksam ist. Zur genauen Bestimmung der Bruchstellen ist es dabei auch bekannt, Kerben oder Bohrungen einzubringen.

Der Vorteil des Bruchtrennens von Pleueln besteht im wesentlichen darin, daß ein besonderer Bearbeitungsaufwand zur genauen Zuordnung der Kappe zum Pleuel entfällt. Nach dem Brechen können die gebrochenen Teile an der Bruchfläche wieder zusammengefügt werden. Besondere, die Zuordnung sichernde Paßelemente können entfallen.

Wichtig ist bei diesem Bearbeitungsvorgang, daß nur die ursprünglich eine Einheit bildenden Teile wieder zusammengefügt werden können. Das Pleuel mit der abgebrochenen Kappe müssen daher in den nachfolgenden Bearbeitungsstationen jeweils zusammengefügt werden. Um dies zu erreichen ist schon vorgeschlagen worden, Greifelemente oder dergleichen vorzusehen, die das Pleuel und die abgebrochene Kappe gemeinsam zur nächsten Bearbeitungsstation transportieren. Dabei kann beispielsweise die Kappe auf dem Pleuel ruhen.

Es ist Aufgabe der Erfindung, Maßnahmen zu treffen, die sicherstellen, daß das Pleuel mit der zugehörigen Kappe immer miteinander transportiert bzw. weiter bearbeitet werden und die ausschließen, daß die zusammengehörigen Teile voneinander getrennt und gegebenenfalls verwechselt werden.

Zur Lösung dieser Aufgabe geht die Erfindung aus von dem Verfahren der eingangs angegebenen Gattung und schlägt vor, daß beim Trennvorgang die Kappe mit den nicht abzutrennenden Teilen des Pleuels durch Mittel verbunden bleiben, die bei dem Trennvorgang eine ausreichende Bewegung der beiden Teile des großen Auges zulassen, die jedoch mindestens bis zum nachfolgenden Bearbeitungsvorgang die beiden Teile zusammenhalten.

Die Mittel, die die beiden Teile des großen Auges zusammenhalten, können beispielsweise federnde Klammern oder ähnliche Einrichtungen sein, die den Trennvorgang nicht oder nicht wesentlich behindern.

Sehr gute Ergebnisse werden dann erhalten, wenn vor dem Trennvorgang die Verbindungsschrauben zur Verbindung der Kappe mit dem Pleuel teilweise eingeschraubt werden. Die Bohrungen für die Verbindungsschrauben sind in der Regel schon vor dem Trennvorgang eingebracht. Erfindungsgemäß werden die Verbindungsschrauben vor dem Trennen teilweise eingeschraubt, und zwar soweit, daß die Schrauben den Trennvorgang an sich nicht behindern. Nach dem Trennen können dann beispielsweise die Schrauben ganz eingedreht werden. Dieser erfindungsgemäße Vorschlag hat den wesentlichen Vorteil, daß bei einer automatischen Bearbeitung keine Probleme auftreten im Zusammenhang mit der Zuordnung der Kappe zum zugehörigen Pleuel. Zur festen Verbindung der Kappe mit dem Pleuel ist es nur noch notwendig, die schon eingedrehten Schrauben fest anzuziehen.

Es ist gefunden worden, daß es günstig ist, wenn die Verbindungsschrauben vor dem Trennvorgang nur soweit eingeschraubt werden, daß zwischen den Schraubköpfen und der zugehörigen Druckfläche auf der Kappe ein Abstand von etwa ein bis zwei Millimetern verbleibt. Dieses Maß reicht aus, um sicherzustellen, daß die Schrauben das Bruchtrennen nicht behindern.

Vorteilhaft ist es, wenn die Köpfe der teilweise eingeschraubten Verbindungsschrauben beim Trennvorgang durch an den Köpfen anliegende Widerlager abgestützt werden. Auf diese Weise wird den teilweise eingeschraubten Verbindungsschrauben noch eine weitere Aufgabe zugeordnet.

Beim Bruchtrennen ist nicht immer sichergestellt, daß die beiden Bruchflächen am großen Auge gleichzeitig entstehen. Ergibt sich zunächst nur eine Bruchfläche, besteht die Gefahr, daß die Kappe unter der Wirkung der Trennkräfte die vorgesehene Lage verändert und daß bleibende Verformungen im Bereich der anderen Bruckfläche auftreten, die später das Zusammenfügen erschweren oder unmöglich machen. Wenn nun die eingeschraubten Verbindungsschrauben zusammen mit den Widerlagern nur eine begrenzte Bewegung im Anschluß an das Durchbrechen an der ersten Bruchfläche zulassen, ist ausgeschlossen, daß im Bereich der zweiten Bruchfläche störende Verformungen auftreten. Dies gilt auch dann, wenn die Kappe nicht starr eingespannt ist. Die bei diesem Vorgang auftretenden und auf die Verbindungsschrauben wirkenden Kräfte werden von den Widerlagern aufgenommen.

In weiterer Ausbildung der Erfindung ist vorgesehen, daß die auf die Stange wirkende Trennkraft mindestens teilweise über die Köpfe der Verbindungsschrauben eingeleitet wird. Durch geeignete Maßnahmen, beispielsweise hydraulische Anordnungen, kann ein Teil der Trennkraft auch auf die Schraubköpfe ausgeübt werden, so daß dieser Teil der Trennkraft nicht über die Stange oder den Teil des großen Auges, der mit der Stange verbunden bleibt, eingeleitet wird. Auf diese Weise gelangt die Trennkraft wenigstens teilweise direkt an die Trennstelle. Die nachteiligen Einflüsse der elastischen Verformungen der einzelnen Elemente des Pleuels werden hierdurch reduziert.

Die Erfindung betrifft weiter eine Vorrichtung zur Durchführung des Verfahrens zum Bruchtrennen von Pleueln. Diese Vorrichtung ist dadurch gekennzeichnet, daß das Pleuel mit der Stange und den nicht abzutrennenden Teilen fest in der ersten Halterung eingespannt ist und daß die zweite Halterung, die unter der Wirkung der Trennkraft relativ zur ersten Halterung beweglich ist, die abzutrennende Kappe aufnimmt, wobei die zweite Halterung einen Ansatz aufweist, der in das große Auge des Pleuels hineinragt, mit Widerlagern an der Vorrichtung, die die Köpfe der Schrauben zur Verbindung der Kappen mit der Stange abstützen.

Bei der Erfindung kann das Widerlager fest mit der ersten Halterung verbunden sein. Diese Bauweise kann dann gewählt werden, wenn nur die Schraubköpfe abzustützen sind.

Bei einer Variante der Erfindung sind die Widerlager von der zweiten Halterung getragen, die Widerlager sind jedoch gegenüber der zweiten Halterung mittels einer hydraulischen Preßeinrichtung beweglich, wobei die hydraulische Preßeinrichtung die Widerlager gegen die Schraubköpfe preßt. Diese Anordnung ist insbesondere dann empfehlenswert, wenn ein Teil der Trennkraft über die Schraubköpfe eingeleitet wird.

In der Zeichnung ist ein Ausführungsbeispiel der Erfindung schematisch dargestellt. Es zeigen.
- Fig. 1: eine Seitenansicht, teilweise im Schnitt, einer Vorrichtung zur Durchführung des erfindungsgemäßen Verfahrens,
- Fig. 2: einen Schnitt durch die Darstellung der Fig. 1 entsprechend der Schnittlinie II-II in größerem Maßstab und
- Fig. 3: eine Draufsicht auf einen Teil der erfindungsgemäßen Vorrichtung in Richtung der Pfeile III-III.

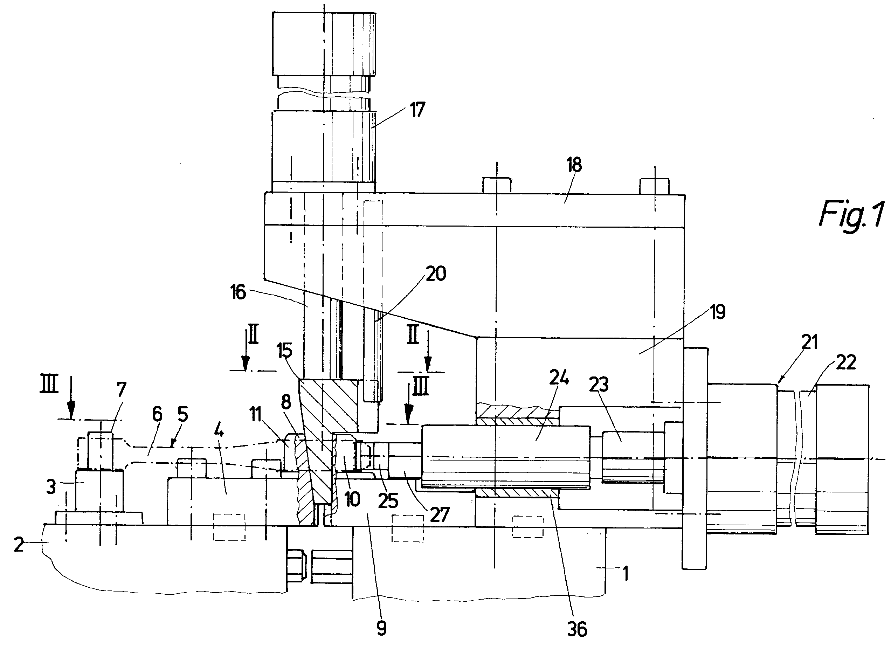

Auf einem Maschinengestell 1, von dem in der Fig. 1 der obere Teil sichtbar ist, ist ein Schlitten 2 beweglich gelagert. Die Beweglichkeit dieses Schlittens 2 ist gering. Sie beträgt etwa eins bis zwei, allenfalls drei Millimeter.

Ein besonderer Antrieb ist für den Schlitten nicht vorgesehen, jedoch empfiehlt es sich, eine Rückholeinrichtung anzuordnen.

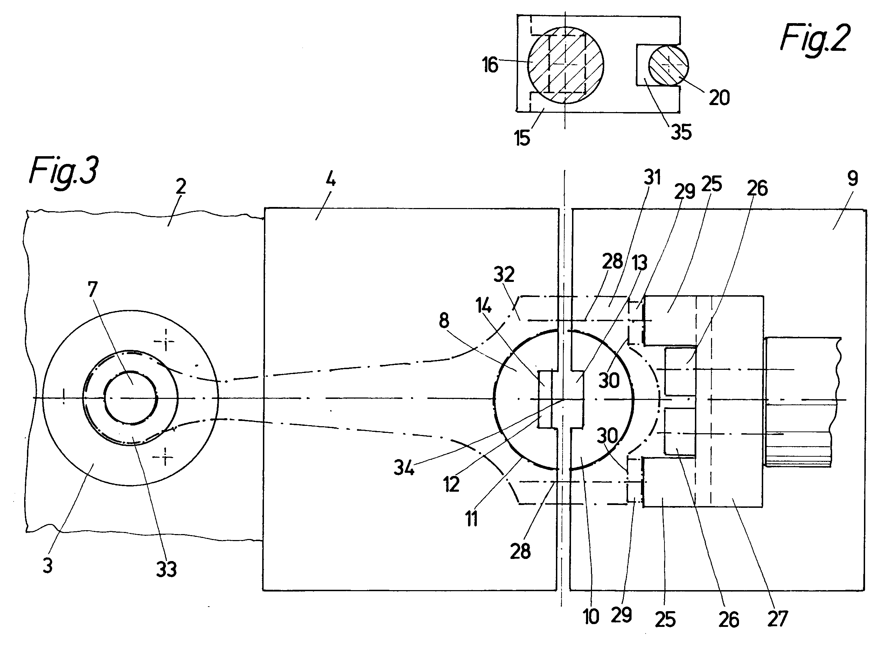

Auf dem Schlitten 2 ist eine erste Halterung, bestehend aus den Teilen 3 und 4, angeordnet, die dazu dient, das Pleuel 5, und zwar die Stange 6 mit den zugehörigen Teilen zu fixieren. Das Pleuel ist in den Zeichnungen mit strichpunktierten Linien angedeutet. Die erste Halterung umfaßt insbesondere einen Zapfen 7, an dem das kleine Auge des Pleuels 5 fixiert werden kann sowie einen Ansatz 8 mit im wesentlichen halbzylindrischer Gestalt, wie diese insbesondere aus der Fig. 3 hervorgeht.

Auf dem Maschinengestell 1 ist eine zweite Halterung 9 angeordnet, die ähnlich wie die erste Halterung einen halbzylindrischen Ansatz 10 trägt, wie dieser ebenfalls insbesondere aus der Fig. 3 zu entnehmen ist.

Die Anordnung ist derart getroffen, daß in der Ausgangsstellung der Vorrichtung das Pleuel 5 mit seinem großen Auge 11 die beiden Ansätze 10 und 8 umfaßt.

Der Ansatz 8 besitzt eine Ausnehmung 12 und der Ansatz 10 eine der Ausnehmung 12 zugewandte weitere Ausnehmung 13. Während die Ausnehmung 13 Flächen aufweist, die parallel zur Achse 34 des großen Auges 11 verlaufen, ist die Wand 14 als Schrägfläche ausge-staltet. In die Ausnehmungen 12 und 13 ragt der Brechkeil 15 hinein, der vom Stößel 16 angetrieben ist. Der Stößel 16 ist die verlängerte Kolbenstange des Hydraulikzylinders 17. Der Hydraulikzylinder ist auf einem Gestell 18 montiert, das von dem Zwischengestell 19 getragen ist, welches wiederum auf das Maschinengestell 1 aufgesetzt ist. Am Gestell 18 ist ferner eine Führungsstange 20 gehalten. Wie insbesondere die Fig. 2 zeigt, dient die Führungstange 20 dazu, eine unerwünschte Verdrehung des Keiles 15 auszuschließen. Die Führungsstange ragt in eine Ausnehmung 35 des Keiles 15 hinein.

Im Zwischengestell 19 ist eine weitere hydraulische Preßeinrichtung 21 gelagert, deren Zylinder mit 22 bezeichnet ist und dessen Kolbenstange 23 über ein Führungsstück 24 in der Hülse 36 bewegt wird. Am Führungsstück 24 ist durch die Schrauben 26 die Brücke 27 gehalten. Die Brücke 27 trägt die beiden Widerlager 25, die, wie insbesondere aus der Fig. 3 hervorgeht, derartig angeordnet sind, daß sie mit den Köpfen 29 der Verbindungsschrauben 28 zusammenwirken können.

Zur Durchführung des erfindungsgemäßen Verfahrens werden in einen ungebrochenen Pleuel die Verbindungsschrauben 28 eingeschraubt. Die Schrauben werden aber nicht ganz eingedreht, insbesondere nicht festgezogen. Je nach der Steigung des Schraubengewindes werden die Schrauben beispielsweise aus der ganz eingedrehten Stellung ein bestimmtes Maß zurückgedreht, so daß die Köpfe der Schrauben von den zugehörigen Druckflächen 30 einen Abstand von etwa ein bis zwei Millimeter aufweisen.

Ein derart vorbereitetes Pleuel wird mit dem großen Auge auf die Ansätze 8 und 10 und mit dem kleinen Auge auf den Zapfen 7 aufgelegt. Bei diesem Auflegevorgang ist der Keil 15 nach oben zurückgezogen. Der Schlitten 2 befindet sich dabei in seiner Ausgangsposition, derart, daß die Ansätze 8 und 10 zusammen im wesentlichen eine zylindrische Außenkontur besitzen.

Nunmehr fährt der Hydraulikzylinder 17 den Keil 15 in die Ausnehmungen 12 und 13 ein und spreizt die Ansätze 8 und 10 auseinander. Der Schlitten 2 kann sich dabei in der Darstellung der Fig. 2 etwas nach links bewegen. Das Pleuel wird brechen und die Kappe 31 wird von den übrigen Teilen des Pleuels 5 abgetrennt.

Da jedoch die Verbindungsschrauben 28 auch die abgetrennte Kappe mit dem Pleuel verbinden, entstehen dadurch beim Pleuelbrechen nicht mehrere lose Teile, vielmehr bleiben die einzelnen Teile des Pleuels, nämlich die Stange 6 mit dem kleinen Auge 33 und dem Teil 32 des großen Auges einerseits und die Kappe 31 sowie die Verbindungsschrauben 28 miteinander verbunden.

Günstig ist es, wenn beim Brechvorgang mittels der hydraulischen Preßeinrichtung 21 die Brücke 27 mit den Widerlagern 25 an den Köpfen 29 der Verbindungsschrauben 28 anliegt. Trotz der Bewegung des Schlittens 2, die die Schraubköpfe 29 mitmachen, werden die Widerlager 25 immer dieser Bewegung folgen und einen Druck auf die Schraubköpfe ausüben, so daß diese nicht überlastet werden. Es ist sogar möglich, einen Teil der Trennkraft über die hydraulische Preßeinrichtung 21 und die Verbindungsschrauben 28 aufzubringen. Durch entsprechende Dimensionierung der jeweiligen Zylinder und der Berücksichtigung der Keilkraft ist dies ohne weiteres möglich.

Nach dem Brechvorgang kann das Pleuel 5 beispielsweise durch automatische Einrichtungen, die gegebenenfalls auch das Einlegen bewirkten, herausgenommen und der weiteren Bearbeitung zugeführt werden. Eine Rückholeinrichtung bringt den Schlitten 2 in die Ausgangsstellung zurück.

## Patentansprüche

1. Verfahren zum Bruchtrennen von Pleueln, wobei die Kappe des großen Auges des Pleuels durch eine in der Pleuelebene wirkende Trennkraft von der Stange abgetrennt wird, die Trennkraft spreizend im Pleuelauge wirksam ist, die Stange mit den nicht abzutrennenden Teilen des Pleuels auf einer ersten Halterung festgespannt wird und an der Kappe eine zweite Halterung anliegt, wobei die beiden Halterungen in Richtung der Trennkraft relativ zueinander bewegt werden, **dadurch gekennzeichnet, daß** beim Trennvorgang die Kappe mit den nicht abzutrennenden Teilen des Pleuels durch Mittel verbunden bleiben, die für den Trennvorgang eine ausreichende Bewegung der beiden Teile des großen Auges zulassen, die jedoch mindestens bis zum nachfolgenden Bearbeitungsvorgang die beiden Teile zusammenhalten.

2. Verfahren nach Anspruch 1**, dadurch gekennzeichnet, daß** vor dem Trennvorgang die Verbindungsschrauben zur Verbindung der Kappe mit dem Pleuel teilweise eingeschraubt werden.

3. Verfahren nach Anspruch 2, **dadurch gekennzeichnet, daß** die Verbindungsschrauben vor dem Trennvorgang nur soweit eingeschraubt werden, daß zwischen den Schraubköpfen und der zugehörigen Druckfläche auf der Kappe ein Abstand von etwa ein bis zwei Millimeter verbleibt.

4. Verfahren nach einem oder mehreren der vorhergehenden Ansprüche, **dadurch gekennzeichnet, daß** die Köpfe der teilweise eingeschraubten Verbindungsschrauben beim Trennvorgang durch an den Köpfen anliegende Widerlager abgestützt werden.

5. Verfahren nach einem oder mehreren der vorhergehenden Ansprüche, **dadurch gekennzeichnet, daß** die auf die Stange einwirkende Trennkraft mindestens teilweise über die Köpfe der Verbindungsschrauben eingeleitet wird.

6. Vorrichtung zur Durchführung des Verfahrens zum Bruchtrennen von Pleueln nach einem oder mehreren der vorhergehenden Ansprüche, **dadurch gekennzeichnet, daß** das Pleuel (5) mit der Stange (6) und den nicht abzutrennenden Teilen (32,33) fest in der ersten Halterung (3,4) eingespannt ist und daß die zweite Halterung (9), die unter der Wirkung der Trennkraft relativ zur ersten Halterung beweglich ist, die abzutrennende Kappe (31) aufnimmt, wobei die zweite Halterung (9) einen Ansatz (10) aufweist, der in das große Auge (11) des Pleuels (5) hineinragt, mit Widerlagern (25) an der Vorrichtung, die die Köpfe (29) der Schrauben (28) zur Verbindung der Kappe (31) mit der Stange (6) abstützen.

7. Vorrichtung nach Anspruch 6, **dadurch gekennzeichnet, daß** die Widerlager fest mit der ersten Halterung verbunden sind.

8. Vorrichtung nach Anspruch 6, **dadurch gekennzeichnet, daß** die Widerlager (25) von der zweiten Halterung (9) getragen sind, die Widerlager (25) jedoch gegenüber der zweiten Halterung (9) mittels einer hydraulischen Preßeinrichtung (21) beweglich sind, wobei die hydraulische Preßeinrichtung (21) die Widerlager (25) gegen die Schraubköpfe (29) preßt.
